# EUROPÄISCHE PATENTSCHRIFT

(11) **EP 0 790 764 B1**
(45) Veröffentlichungstag und Bekanntmachung des Hinweises auf die Patenterteilung: **20.09.2000**
(21) Anmeldenummer: 95936552.9
(22) Anmeldetag: 26.10.1995
(51) Int. Cl.: A01G 7/06

(54) **IMPLANTIERBARE VORRICHTUNG ZUR VERABREICHUNG VON WIRKSTOFFEN AN PFLANZEN**
IMPLANTABLE DEVICE FOR ADMINISTERING ACTIVE SUBSTANCES TO PLANTS
DISPOSITIF IMPLANTABLE POUR L'ADMINISTRATION DE SUBSTANCES ACTIVES A DES VEGETAUX

(30) Priorität: 12.11.1994 DE 4440528
(43) Veröffentlichungstag der Anmeldung: 27.08.1997
(73) Patentinhaber: LTS Lohmann Therapie-Systeme AG, 56567 Neuwied (DE)
(72) Erfinder: HOFFMANN, Hans-Rainer, D-56566 Neuwied (DE); KLOCZKO, Malgorzata, D-53545 Linz (DE); ROREGER, Michael, D-56567 Neuwied (DE)
(74) Vertreter: Flaccus, Rolf-Dieter, Dr.
(86) Internationale Anmeldenummer: EP9504204
(87) Internationale Veröffentlichungsnummer: WO9615660

(56) Entgegenhaltungen:
- EP-A- 0 136 476
- GB-A- 1 570 608

## Beschreibung

Die Erfindung bezieht sich auf einen wirkstoffgetränkten, in Pflanzenhohlräume einzusetzenden Keramikkörper zur anhaltenden Behandlung von Pflanzen, mit systemisch wirkenden Pflanzenschutzmitteln, Pflanzenstärkungsmitteln, Wachstumsregulatoren, Nährstoffen oder anderen Mitteln zur Steuerung biologischer Prozesse.

Eine Verabreichung von Wirkstoffen an Pflanzen mittels implantierbarer Vorrichtungen ist an sich bekannt und in der einschlägigen Literatur erwähnt. Beispielsweise sind solche den Patentschriften JP 5803 9602 und AU 84 31497 zu entnehmen.

Die Publikation JP 5803 9602 offenbart implantierbare quellfähige Wirkstoffsysteme, die aus einer Mischung hydrophiler und wasserabsorbierender Polymere bestehen. Das Funktionsprinzip dieser Systeme besteht darin, daß die Freisetzung des Wirkstoffs infolge seiner Solubilisierung erfolgt und somit durch die Wasseraufnahme der Pflanze gesteuert wird. Dieser Regelmechanismus weist jedoch folgenden Nachteil auf:

Weil die Wirkstoffabgabe nach Maßgabe der Wasserabsorption erfolgt, werden die Freisetzungsraten durch den Hydratationszustand der Gewebezellen der Pflanze am Applikationsort bestimmt. Der Grad der Zellhydratation unterliegt jedoch erfahrungsgemäß großen Schwankungen, wobei die Schwankungsbreite vom Zustand des Wasserhaushaltes der Pflanze abhängt. Extrem niedrige bzw. hohe Wasserpotentiale der pflanzlichen Zellen können entweder zu einer Unterbrechung der Wirkstoffabgabe oder zu einer raschen Freisetzung und folglich zu einer unerwünschten vorzeitigen Systemerschöpfung führen. Eine langfristige und zuverlässige Steuerung der pro Zeiteinheit zu verabreichenden Wirkstoffmenge ist mittels dieser Systeme nicht möglich.

Im Falle des Patentes AU 843 1497 handelt es sich um ein Abgabesystem, das in erster Linie zum Zwecke der Irrigation und Fertilisation entwickelt wurde. Es besteht aus einem porösen keramischen Implantat und einem externen Gas- oder Flüssigkeitsreservoir, die miteinander verbunden sind. Eine Wasser- und Wirkstoffabgabe erfolgt hier unter Ausnutzung der Kapillarkräfte des Implantat-Körpers, wobei der natürliche Transpirationsstrom der Pflanze eine für die Förderung der Wirkstoffträgerflüssigkeit notwendige Triebkraft darstellt. Die Steuerung des Flüssigkeitsstromes und der damit verbundenen Wirkstofflieferung an das pflanzliche Leitsystem wird hier also der Pflanze selbst überlassen. Somit ist es offensichtlich, daß dieses System für eine exakte Wirkstoffdosierung ungeeignet ist, was seinen Einsatz für die Verabreichung von Pflanzenschutzmitteln oder Wachstumsregulatoren ausschließt. Beim Pflanzenschutz in der Forst- und Gartenbaupraxis ist es nämlich wichtig, den Wirkstoffbedarf an die spezifischen Erfordernisse der jeweiligen Wirt-Pathogen-Beziehung (zeitliche Krankheits- und Schädlingsbefallentwicklung, Höhe der wirtschaftlichen Schadensschwelle) anzupassen. Nicht zuletzt hat die Wirkstoffabgabe-Rate auch Einfluß auf die Kostensituation bei der Behandlung eines z.B. größeren Pflanzen- bzw. Baumbestandes.

Der vorliegenden Erfindung liegt die Aufgabe zugrunde, eine implantierbare Vorrichtung zur Verabreichung von Wirkstoffen an Pflanzen bereitzustellen, bei der die Kopplung der Wirkstoffabgabe mit dem Wasserhaushalt der Pflanze auf ein Mindestmaß beschränkt und eine Steuerung der Wirkstoffabgabe-rate unter Vermeidung vorgenannter Schwierigkeiten und technischer Grenzen mit wirtschaftlichen Mitteln ermöglicht wird.

Die Lösung der Aufgabe gelingt mit einem in Pflanzenhohlräume einzusetzenden Keramikkörper der eingangs genannten Art mit der Ausbildung gemäß den Merkmalen des Anspruchs 1.

Zweckmäßige weitere Ausgestaltungen der Vorrichtung sind entsprechend den Unteransprüchen vorgesehen.

Wirkstoffhaltige Keramikkörper an sich sind bereits seid 1980 aus der GB 1 570 608 B1 bekannt, die mit Parfums, Insektiziden oder Germiziden getränkt als Air-freshener dienen und den enthaltenen Wirkstoff an die umgebende Atmosphäre abgeben. Es wurde nun überraschend gefunden, daß in das Hohlraumsystem poröser Keramikkörper Wirkstoffe eingelagert werden können, die nach Einbringen der Keramikkörper auch in verholzte Pflanzenorgane der Pflanze fortschreitend freigesetzt werden. Dabei ist der Wirkstoff in offenen Poren verteilt und das Porenvolumen erfindungsgemäß zum Zeitpunkt der Implantation so bemessen ist, daß es die gesamte abzugebende Wirkstoffmenge enthält.

Zu den wichtigsten Charakteristika der erfindungsgemäßen Vorrichtung gehört ihre Art und Größenordnung der Gesamtporosität, d.h. Volumen, Größe und Streuung sowie Verteilung der Poren. Weil in das poröse Hohlraumsystem des keramischen Körpers erwünschte Mengen von Wirkstoffen eingelagert werden sollen, sind die vorgenannten Parameter für die Wirkstofffreigabe von entscheidender Bedeutung. Der Vorteil der Vorrichtung nach der Erfindung besteht in der Nutzung ihres Porensystems als treibende und regulierende Kraft bei der Wirkstofffreisetzung. Dies ermöglicht eine weitgehende Abkopplung der Wirkstofffreigabe vom Wasserhaushalt der Pflanze.

Als Ausgangsmaterialien zur Herstellung der erfindungsgemäßen Vorrichtung können verschiedene Tonminerale Al₂O₃ x 2 SiO₂ x 2 H₂O bis Al₂O₃ x 4 SiO₂ x H₂O verwendet werden. Hierzu seien beispielsweise Kaoline (Kaolinite, Allophane, Halloysite), Illite (Glaukonit), Smektite (Montmorillonit, Nontronit, Beidellit) und Vermiculite genannt, wobei sie in der Regel in der Mischung vorliegen. Die angeführten Tone sind dadurch charakterisiert, daß sie in feuchtem Zustand quellen und plastisch verformbar werden, jedoch nach dem Trocknen ihre Form beibehalten und während des Brennens bei einer Temperatur zwischen 800°C und 2000°C, bevorzugt zwischen 1000 und 1200°C, unter Entstehung geblähter Poren erhärten. Als besonders geeignet werden hierzu Kaolinite, Illite und Halloysite vorgeschlagen, die üblicherweise als keramische Werkstoffe in verschiedenen Anwendungsbereichen Verwendung finden.
Werden bei der Herstellung der erfindungsgemäßen Vorrichtung Tone (Gemenge verschiedener Minerale) verwendet, so muß ihre mineralische Zusammensetzung sowie der Kornaufbau bekannt sein, da diese Parameter die Eigenschaften und insbesondere den Porenanteil des keramischen Formkörpers bestimmen.

Es kann sich bei der Vorrichtung aber auch um keramische, porenhaltige Formkörper handeln, die, ähnlich wie bei Gasbeton, aus hydraulisch abbindbaren mineralischen Grundstoffen bestehen, und deren Porenanteil durch eine steuerbare Reaktion chemischer Komponenten hergestellt ist.

Um die Porenstruktur zu beeinflussen, stehen dem Fachmann folgende Möglichkeiten zur Verfügung:

Auswahl der Tonmineralien, Variation der Primärteilchengröße, Zusatz von Hilfsstoffen und Veränderung der Bedingungen (Temperatur und Zeit) des Herstellungsverfahrens, sei es durch einen thermischen oder durch einen reaktiven Prozess.

Erfindungsgemäß werden die Ausgangsmaterialien so gewählt, daß die aus ihnen hergestellte implantierbare Vorrichtung ein offenporiges Gefüge mit einem Porenvolumen von etwa 70 bis 95%, insbesondere 80%, besitzt. Das Porengrößenspektrum der erfindungsgemäßen Vorrichtung ist relativ breit und umfaßt Werte von 0,05 bis 5,0 µm. Als bevorzugte Porenbreite ist dabei der Bereich zwischen 0,1 und 2,0 µm zu nennen.

Werden Tonminerale gleicher Primärteilchengröße verwendet, so erreicht man in der Regel ein relativ homogenes Porenspektrum (geringe Porengrößensteuerung). Die Korngröße der verwendeten Materialien kann durch Sieben und durch Sedimentation in Wasser ermittelt werden. Als bevorzugte Teilchengröße ist der Bereich ≤ 2 µm zu nennen. Durch Variation der Teilchengröße kann eine Steuerung der Porosität vorgenommen werden.

Eine weitere Möglichkeit, die Porosität der erfindungsgemäßen Vorrichtung zu variieren, bietet der Einsatz verschiedener Zusatzstoffe bei ihrer Herstellung. Bekanntermaßen kommt es bei der Herstellung von keramischen Erzeugnissen zu einer durch den Wasserentzug verursachten Volumenverringerung. Um der möglichen Abnahme des Porenraumes entgegenzuwirken, werden sogenannte Magerungsmittel eingesetzt. Durch Zusatz dieser Stoffe wird erreicht, daß das abgegebene Wasser durch Luftporen ersetzt wird. Als geeignete Ergänzungsmittel seien hier beispielsweise Kieselsäure (in Form von Quarz oder Quarzit) oder gemahlene Schamotte genannt. Die Verwendung von Magerungsmitteln fördert gleichzeitig die mechanische Festigkeit des Endproduktes.

Weitere produktverbessernde Zusatzstoffe, die bei der Herstellung der erfindungsgemäßen Vorrichtung eingesetzt werden können, sind Porosierungsmittel. Hierzu gehören organische Faserstoffe wie Papierschlamm und Sägemehl oder andere brennbare Materialien wie Braunkohle, Kalkstein und geschäumtes Polystyrol. Sie werden in die Rohstoffmasse eingearbeitet und anschließend während des Sinterprozesses unter Vergasung ausgebrannt.

Als eine Möglichkeit der Porositätssteuerung bei der erfindungsgemäßen Vorrichtung seien zuletzt thermische Bedingungen ihrer Herstellung, insbesondere die der Brandführung, erwähnt. Mit der Steigerung der Brenntemperatur läuft bekanntermaßen eine Abnahme der Porosität und Zunahme mechanischer Eigenschaften der keramischen Produkte einher. Der Fachmann kann somit die Feuerführung während der einzelnen Brennstadien so abstimmen, daß die geforderten Porositätseigenschaften der erfindungsgemäßen Vorrichtung erreicht werden. Als bevorzugte Brandtemperatur ist hierzu der Bereich 950 bis 1050 bzw. 1000 bis 1200°C zu nennen.

Zur Beladung mit dem Wirkstoff wird die erfindungsgemäße Vorrichtung (poröser Formkörper) mit einer wässrigen Wirkstofflösung getränkt. Durch die Konzentration des Wirkstoffes in der Lösung kann der Gehalt des Wirkstoffes in der Vorrichtung gesteuert werden. Gegebenenfalls kann das Tränken mit dem Wirkstoff auch mehrmals durchgeführt werden, um höhere Gehalte an Wirkstoff zu erzielen. Erfindungsgemäß können 1 bis 20 Gew.-% Wirkstoff in die Vorrichtung eingelagert werden, wobei die Wirkstoffe alleine oder in Mischung miteinander vorliegen können.

Als Wirkstoffe können im Prinzip alle Stoffe verwendet werden, mit denen Vorgänge im pflanzlichen oder tierischen Organismus beeinflußt werden können. Im Rahmen der vorliegenden Erfindung werden bevorzugt Pflanzenschutzmittel wie Fungizide und Insektizide eingesetzt.

Erläuternde, jedoch nicht beschränkende Beispiele von Wirkstoffen, die mittels der erfindungsgemäßen Vorrichtung an Pflanzen abgegeben werden können, sind
- Fungizide, z.B. Benomyl, Bromuconazol, Bitertanol, Etaconazol, Flusilazol, Furalaxyl, Fosetyl-A1, Imazalil, Metalaxyl, Penconazol, Propiconazol, Thiabendazol, Triadimefon, Triadimenol oder Triforine
- Insektizide, z.B. Buthocarboxim, Dimethoat, Fenoxycarb, Methamyl, Oxamyl, Oxydemteton-methyl, Pirimicarb oder Propoxur.
- Düngemittel, z.B. Superphosphat, Thomasphosphat

Die erfindungsgemäßen Vorrichtungen können als Formstücke verschiedener Geometrie gewonnen werden. Als besonders bevorzugt sind zylindrische, stäbchen- und kugelförmige Teilstücke zu nennen. Zweckmäßigerweise sind sie so bemessen, daß sie sich manuell leicht handhaben lassen. Im allgemeinen beträgt die Teilchengröße 2,0 bis 100 mm, bevorzugt 5,0 bis 50 mm.

Eine besonders vorteilhafte Ausführungsform des erfindungsgemäßen Implantates ist eine Vorrichtung, bei der ein oder mehrere keramische Formteile auf einer starren Platte befestigt sind. Die Platte besteht aus einem mechanisch widerstandsfähigen, pflanzengewebesympathischen Material. Besonders geeignet hierzu ist Holz. Der besondere Vorteil dieser Ausführungsform liegt darin, daß die Platte, indem sie den Hohlraum in der Pflanze verschließt, eine Schutzabdeckung bildet und die unerwünschte Möglichkeit eines Wirkstoffaustritts eliminiert oder zumindest minimiert.

Die erfindungsgemäße Vorrichtung wird in die Sproßachse der Pflanze implantiert, indem sie in zuvor geschaffene Hohlräume (beispielsweise Bohrlöcher) eingesetzt wird. Besonders geeignet ist die Vorrichtung zum Einsatz bei Pflanzen mit verholzten Trieben (Sträucher und Bäume).
Die Erfindung wird anhand des folgenden Beispiels erläutert:

### Beispiel 1:

In 500 g einer aus gleichen Gewichtsteilen von Witterschlicker Blauton 38/40 und Satzveyer Blauton bestehenden Tonmischung mit einem Wassergehalt von 15% und folgendem Korngrößenaufbau

| Korngröße ∅ in µm | Gew.-% |
|---|---|
| > 63 | 2,0 |
| 63-20 | 1,7 |
| 20-6,3 | 1,7 |
| 6,3-2,0 | 7,2 |
| < 2,0 | 88,4 |

wurden 25 g zuvor in Wasser gequollener Sägespäne mechanisch eingearbeitet (unterrührt). Danach wurde der Feuchtigkeitsgehalt der so erhaltenen Masse unter Zugabe von Wasser auf 40 Gew.-% erhöht.
Die so hergestellte plastische Masse wurde in einem Extruder zuerst zu einer "Nudelware" verarbeitet, die anschließend in zylindrische Formteile (6 cm x 2 cm x 1 cm) geschnitten wurde. Die so erhaltenen Rohlinge wurden in einem Trockenschrank bei 30°C über einen Zeitraum von 24 Stunden getrocknet. Anschließend wurde das Trockengut in einem elektrisch beheizten ofen (Fa. Naber-Therm) unter kontinuierlichem Temperaturanstieg gebrannt. Die Verweilzeit der Formlinge im Hauptbrenntemperaturbereich (950°C) betrug dabei 1,5 Stunden. Nach dem Abkühlen der Formteile wurden ihre endgültigen Dimensionen (5,1 cm x 1,7 cm x 0,85 cm) und Gesamtporosität (60%) ermittelt.

Zur Beladung mit dem Wirkstoff wurden sie in einer 10% A1-Fosetyl-Lösung getränkt. Die anhand der Gewichtsveränderung der Vorrichtung und Wirkstofflösungskonzentration ermittelte in das Porensystem eingelagerte Wirkstoffmenge betrug 0,2 g/Vorrichtung.

Durch die Erfindung steht eine sehr einfache, leicht zu handhabende und preiswerte Wirkstoffabgabevorrichtung zur Verfügung, die insbesondere innerhalb der Städte, wo chemische Baumbehandlung problematisch ist, eine wertvolle Alternative zu konventionellen Techniken darstellt.

## Patentansprüche

1. Wirkstoffgetränkter in Pflanzenhohlräume einzusetzender Keramikkörper zur anhaltenden Behandlung von Pflanzen mit systemisch wirkenden Pflanzanschutzmitteln, Pflanzenstärkungsmitteln, Wachstumsregulatoren, Nährstoffen oder anderen Mitteln zur Steuerung biologischer Prozesse gebildet durch einen wirkstoff-getränkten offenporigen Keramikkörper mit einem ausreichenden Gesamtporenvolumen zur Aufnahme des Behandlungswirkstoffs in gelöster oder dispergierter Form und einer der gewünschten Freigaberate des Wirkstoffes angepaßten Porengröße und -verteilung.

2. Wirkstoffgetränkter Keramikkörper nach Anspruch 1, dadurch gekennzeichnet, daß der Keramikkörper aus bei Temperaturen zwischen 800 °C und 2000 °C, bevorzugt zwischen 1000 °C und
1200 °C, gebrannten mineralischen Grundstoffen besteht, wobei die Werkstoffe aus folgenden Gruppen der Tonminerale ausgewählt sind:
Kaoline (Kaolinite, Allophane, Halloysite), Illite (Glaukonit), Smektite (Montmorillonit, Nontronit, Beidellit), Chlorite und Vermiculite.

3. Wirkstoffgetränkter Keramikkörper nach Anspruch 1, dadurch gekennzeichnet, daß der Keramikkörper aus hydraulisch abbindenden mineralischen Grundstoffen besteht, die ein bevorzugt durch chemische Reaktion hervorgerufenes Porenvolumen aufweisen.

4. Wirkstoffgetränkter Keramikkörper nach den Ansprüchen 1 bis 3, dadurch gekennzeichnet, daß die Poren des Keramikkörpers im wesentlichen durch Zersetzung zugemischter wärme-zersetzbarer Zusatzstoffe, insbesondere aus der Gruppe, bestehend aus Sägemehl, Papierschlamm, Braunkohle, geschäumtem Polystyrol, Kalkstein und Kreidemehl, beim Brennprozeß gebildet sind.

5. Wirkstoffgetränkter Keramikkörper nach einem oder mehreren der Ansprüche 1 bis 4, dadurch gekennzeichnet, daß der Keramikkörper ein Spektrum der Porengröße mit Werten von 0,05 bis 5,0 µm, bevorzugt zwischen 0,1 und 2,0 µm, aufweist.

6. Wirkstoffgetränkte Keramikkörper nach einem oder mehreren der Ansprüche 1 bis 5, dadurch gekennzeichnet, daß diese mit einer Schutzabdeckung in Form einer zum Verschluß des Hohlraums in der Pflanze geeigneten Platte verbunden ist.

7. Verwendung des wirkstoffgetränkten Keramikkörpers nach einem oder mehreren der vorangehenden Ansprüche zum Implantieren in zuvor geschaffene Hohlräume der Sproßachsen von Pflanzen.

8. Verfahren zur Herstellung des wirkstoffgetränkten Keramikkörpers nach einem oder mehreren der Ansprüche 1 bis 6, dadurch gekennzeichnet, daß zunächst ein poröser keramischer Formkörper gemäß Anspruch 1 hergestellt und in diesen der in einer fließfähigen Form vorliegende Pflanzenwirkstoff mittels Tränken eingebracht wird.

## Claims

1. Active substance-impregnated ceramic body to be implanted in cavities of plants for long-term treatment of plants, comprising systemically active plant protection agents, plant restoratives, growth regulators, nutrients or other agents for the control of biological processes,
formed by an active substance-impregnated open-pored ceramic body having an overall pore volume sufficient for receiving the active substance used in the treatment in dissolved or dispersed form, and with a pore size and distribution adapted to the desired active substance release rate.

2. Active substance-impregnated ceramic body according to claim 1, characterized in that the ceramic body consists of mineral base materials baked at temperatures between 800°C and 2000°C, preferably between 1000 and
1200°C, the materials being selected from the following groups of clay minerals:
kaolines (kaolinites, allophanes, halloysites), illites (glauconite), smectites (montmorillonite, nontronite, beidellite), chlorites, and vermiculites.

3. Active substance-impregnated ceramic body according to claim 1, characterized in that the ceramic body consists of mineral base materials which set hydraulically and have a pore volume preferably caused by chemical reaction.

4. Active substance-impregnated ceramic body according to claims 1 to 3, characterized in that the pores of the ceramic body are formed during the baking process essentially by degradation of admixed, heat-degradable additives, in particular of the group consisting of saw dust, paper pulp, lignite, expanded polystyrene, limestone, and chalk flour.

5. Active substance-impregnated ceramic body according to one or several of claims 1 to 4,
characterized in that the ceramic body has a spectrum of pore size with values of 0.05 to 5.0 µm, preferably between 0.1 and 2.0 µm.

6. Active substance-impregnated ceramic body according to one or several of claims 1 to 6,
characterized in that it is connected with a protective cover in the form of a plate which is suitable for closure of the cavity in the plant.

7. The use of the active substance-impregnated ceramic body according to one or several of the preceding claims for implantation into previously formed cavities of the shoot axes of the plants.

8. A process for the production of the active substance-impregnated ceramic body according to one or several of claims 1 to 6, characterized in that a porous ceramic molded article according to claim 1 is made first and that the active substance present in a flowable form is incorporated therein by means of impregnation.

## Revendications

1. Corps en céramique imprégné de substances actives, à incorporer dans des cavités de plantes pour le traitement de plantes en continu avec des agents de protection des plantes, des agents de renforcement des plantes, des régulateurs de la croissance, des substances nutritives ou d'autres agents pour le réglage de processus biologiques, tous ces agents ayant un effet systémique, formé par un corps en céramique à pores ouverts imprégné de substances actives, possédant un volume poreux total suffisant pour la réception de la substance active de traitement sous forme dissoute ou sous forme dispersée et une grosseur de pores et une distribution de pores adaptées à la vitesse de libération désirée de la substance active.

2. Corps en céramique imprégné de substances actives selon la revendication 1, caractérisé en ce que le corps en céramique est constitué par des matières premières minérales portées à cuisson à des températures entre 800°C et 2.000°C, de préférence entre 1.000°C et 1.200°C, les matières premières étant sélectionnées à partir des groupes de matières minérales des argiles réfractaires ci-après:
les kaolins (les kaolinites, les allophanes, les halloysites), les illites (la glauconie), les smectites (la montmorillonite, la nontronite, la beidellite), les chlorites et les vermiculites.

3. Corps en céramique imprégné de substances actives selon la revendication 1, caractérisé en ce que le corps en céramique est constitué par des matières premières minérales à prise hydraulique qui présentent un volume poreux dû de préférence à une réaction chimique.

4. Corps en céramique imprégné de substances actives selon les revendications 1 à 3, caractérisé en ce que les pores du corps en céramique sont formés au cours du processus de cuisson essentiellement par décomposition d'additifs ajoutés par mélange, aptes à une décomposition thermique, choisis en particulier parmi le groupe constitué par la sciure de bois, la pulpe de papier, la lignite, le polystyrène expansé, la roche calcaire et la poussière de craie.

5. Corps en céramique imprégné de substances actives selon une ou plusieurs des revendications 1 à 4, caractérisé en ce que le corps en céramique présente un spectre de la grosseur des pores possédant des valeurs de 0,05 à 5,0 µm, de préférence entre 0,1 et 2,0 µm.

6. Corps en céramique imprégné de substances actives selon une ou plusieurs des revendications 1 à 5, caractérisé en ce qu'il est relié à un recouvrement de protection sous la forme d'une plaque appropriée pour obturer les cavités dans les plantes.

7. Utilisation du corps en céramique imprégné de substances actives selon une ou plusieurs des revendications précédentes à des fins d'implantation dans des cavités pratiquées au préalable dans les axes des pousses de plantes.

8. Procédé pour la fabrication du corps en céramique imprégné de substances actives selon une ou plusieurs des revendications 1 à 6, caractérisé en ce qu'on fabrique d'abord un corps moulé poreux en céramique selon la revendication 1 et on introduit dans ce dernier, par imprégnation, la substance active végétale présente sous une forme apte à l'écoulement.
